# EUROPÄISCHE PATENTSCHRIFT

(11) **EP 2 182 330 B1**
(45) Veröffentlichungstag und Bekanntmachung des Hinweises auf die Patenterteilung: **23.09.2015**
(21) Anmeldenummer: 09173059.8
(22) Anmeldetag: 14.10.2009
(51) Int. Cl.: G01D 5/245

(54) **Positions-/Wegmesssystem mit kodiertem Masskörper**
Positioning / distance measuring system with encoded measurement body
Système de mesure de position/trajectoire doté d'un corps de mesure codé

(30) Priorität: 28.10.2008 DE 102008055680
(43) Veröffentlichungstag der Anmeldung: 05.05.2010
(73) Patentinhaber: BALLUFF GmbH, 73765 Neuhausen (DE)
(72) Erfinder: Burkhardt, Thomas, 73119 Zell (DE); Bauer, Ralph, 74366 Kirchheim/Neckar (DE)
(74) Vertreter: Hoeger, Stellrecht & Partner Patentanwälte mbB

(56) Entgegenhaltungen:
- WO-A2-03/044465
- DE-U1- 9 422 130
- DE-U1- 20 302 273
- US-A- 4 901 073
- US-A- 5 260 568
- US-A- 5 894 678

## Beschreibung

Die Erfindung betrifft ein Positions-/Wegmesssystem, umfassend einen Sensorkopf und einen kodierten Maßkörper, wobei der Maßkörper sich in einer ersten Richtung und in einer quer zur ersten Richtung liegenden zweiten Richtung erstreckt, einen Absolutpositionsbestimmungsbereich aufweist und einen Inkrementalpositionsbestimmungsbereich mit einer Kodierung in der ersten Richtung aufweist, und wobei der Absolutpositionsbestimmungsbereich eine Kodierung in der zweiten Richtung aufweist, der Sensorkopf eine erste Sensoreinrichtung mit einer Sensorauflösung parallel zur ersten Richtung aufweist, welche dem Inkrementalpositionsbestimmungsbereich zugeordnet ist, und eine zweite Sensoreinrichtung mit einer Sensorauflösung in einer zweiten Richtung aufweist, welche dem Absolutpositionsbestimmungsbereich zugeordnet ist.

Wegsensoren mit magnetisch kodiertem Maßkörper sind in dem Buch "Lineare Weg- und Abstandssensoren" von T. Burkhardt, A. Feinäugle, S. Fericean und A. Forkl, Verlag Moderne Industrie, Die Bibliothek der Technik, Band 271, München 2004 beschrieben.

Die magnetischen Feldlinien, welche vom Maßkörper ausgehen, bilden ein dreidimensionales Vektorfeld. Der Sensorkopf bewegt sich oberhalb des Maßkörpers in diesem Feld.

Im Sensorkopf befinden sich magnetfeldsensitive Sensoren, die entweder die Komponente des Magnetfeldvektors in der ersten Richtung oder den Winkel des magnetischen Vektorfelds zur ersten Richtung messen.

Aus der DE 100 28 136 A1 ist ein Positionsmesssystem bekannt, welches zur Bestimmung der relativen Lage zweier zueinander beweglicher Objekte dient. Es umfasst eine dem ersten Objekt zugeordnete Inkrementalspur mit einer periodischen Strichstruktur, eine einem zweiten Objekt zugeordnete Abtasteinheit zur Abtastung der Strichstruktur und zur Erzeugung eines entsprechenden Inkrementalsignals sowie Mittel zur Erzeugen einer Absolutpositionsinformation bezüglich der Lage der zueinander beweglichen Objekte. Die Ausdehnung der Striche entlang der Erstreckungsrichtung der Inkremen-talspur variiert zumindest auf einem Teil der Breite der Inkrementalspur derart, dass der periodischen Strichstruktur eine Struktur mit einer Absolutpositionsinformation überlagert ist.

Aus der DE 10 2006 010 161 A1 ist eine Codestruktur für eine Positionsmesseinrichtung mit einer Mehrzahl entlang einer ersten Richtung parallel zueinander erstreckter Codespuren bekannt, die entlang einer quer zur ersten Richtung verlaufenden zweiten Richtung derart hintereinander angeordnet sind, dass durch Abtastung eines mehrere Codespuren entlang der ersten Richtung jeweils teilweise erfassenden Abschnitts der Codestruktur mittels einer Abtasteinrichtung ein absoluter Positionswert sowohl für die erste Richtung als auch für die zweite Richtung gewinnbar ist. Die einzelnen Codespuren weisen jeweils eine absolute serielle Codierung für eine Positionsmessung entlang der ersten Richtung auf und sind derart angeordnet, dass die durch Abtastung des Ausschnitts der Codestruktur gewonnene Kombination von Positionsmesswerten für die erste Richtung die absolute Position der Abtasteinrichtung bezüglich der Codestruktur sowohl entlang der ersten Richtung als auch entlang der zweiten Richtung eindeutig bestimmt.

Aus der DE 102 10 326 A1 ist eine Anlage mit einem Magnetisierungskopf bekannt.

Aus der DE 10 2005 039 280 A1 ist eine integrierte Schaltung mit Magnetfeldsensoren, insbesondere für Bauteile in Kraftfahrzeugen, bekannt, bei der auf dem gleichen Substrat Strukturen für mindestens zwei magnetfeldempfindliche Sensorelemente aufgebracht sind, welche so angeordnet sind, dass ein magnetisches Feld nach Größe und/oder Richtung ortsaufgelöst gemessen werden kann. Ferner sind elektronische Bauelemente aufgebracht, welche zumindest eine teilweise Verarbeitung oder Auswertung der Signale der Sensorelemente durchführen. Es ist eine anwendungsspezifische Auswahl und/oder Verarbeitung und/oder Auswertung der Signale der Sensorelemente durchführbar.

Aus der EP 0 503 716 P1 (DE 692 22 072 T2) ist eine Messeinrichtung zur Bestimmung einer absoluten Position eines bewegbaren Elements mit einem Skalenteilungselement mit einer Anzahl Spuren und einem Aufnehmer, der eine der Anzahl der Spuren entsprechende Anzahl Abtastelemente umfasst, wobei die Abtastelemente mit Sensoren versehen sind, bekannt. Die genannten Spuren enthalten eine Inkrementalspur und eine Absolutspur und sind als eine Aufeinanderfolge streifenförmiger Teile gebildet, die jeweils eine von den Sensoren detektierbare Eigenschaft haben, die von der Lage auf dem Skalenteilungselement abhängt. Es ist ferner ein Signalverarbeitungssystem zur Bestimmung der absoluten Position des bewegbaren Elements aus einer Kombination von einerseits auf den Sensoren des zur Absolutspur gehörenden Abtastelements stammenden Signalen von andererseits aus den Sensoren der zur Inkrementalspur gehörenden Abtastelements stammenden Signalen bekannt. Die Inkrementalspur und die Absolutspur sind auf dem Skalenteilungselement zu einer einzigen zusammengesetzten Spur kombiniert, in der die Mittellinien der streifenförmigen Teile auf gleichem Abstand voneinander liegen. Die detektierbare Eigenschaft auf der zusammengesetzten Spur ist pseudozufällig über die streifenförmigen Teile verteilt, wobei die Kombination von Signalen für einen Mittenabstand der zusammengesetzten Spur einen für diesen Mittenabstand spezifischen Wert hat, wobei ungefähr 75 % der Mittenabstände der zusammengesetzten Spuren, die von den Abtastelementen gelesen werden, Inkrementalinformation repräsentieren.

Aus der US 2005/0060905 A1 ist ein Codierer bekannt, welcher einen Maßstab und einen Maßstableser umfasst. Der Maßstab weist dabei eine Mehrzahl von Referenzpunkten auf, die in Längsrichtung beabstandet voneinander sind. Die Referenzpunkte sind entlang des Maßstabs in einem Zufallsmuster oder Pseudozufallsmuster angeordnet.

Aus der US 5,260,568 ist ein Absolutpositionsmesssystem bekannt, welches eine Lichtquelle umfasst und eine Skala umfasst, welche einen Gitterfenster-Track umfasst, in welchem Gitterfenster so angeordnet sind, dass mindestens ein Gitterfenster in einem Bereich von parallelen Lichtstrahlen, welche von der Lichtquelle emittiert werden, angeordnet ist. Jedes der Gitterfenster umfasst ein Beugungsgitter, welches einen Lichtstrahl in einem spezifischen Winkel, einer spezifischen Richtung oder einer spezifischen Intensität beugt. Es ist ferner ein Detektor vorgesehen, welcher den entsprechenden Lichtstrahl empfängt.

Der Erfindung liegt die Aufgabe zugrunde, ein Positions-/Wegmesssystem der eingangs genannten Art bereitzustellen, welches insbesondere eine erhöhte Genauigkeit aufweist.

Diese Aufgabe wird bei dem eingangs genannten Positions-/Wegmesssystem erfindungsgemäß dadurch gelöst, dass der Maßkörper magnetisch kodiert ist, dass der Absolutpositionsbestimmungsbereich und der Inkrementalpositionsbestimmungsbereich in der zweiten Richtung nebeneinander angeordnet sind oder miteinander kombiniert sind, wobei Polfelder des Inkrementalpositionsbestimmungsbereichs und Polfelder des Absolutpositionsbestimmungsbereichs in der zweiten Richtung ohne Abstand dazwischen nebeneinander angeordnet sind, dass ein oder mehrere Polfelder des Inkrementalpositionsbestimmungsbereichs und ein oder mehrere Polfelder des Absolutpositionsbestimmungsbereichs in einem Streifen angeordnet sind und der Maßkörper eine Mehrzahl von in der ersten Richtung nebeneinander angeordneten Streifen umfasst, und dass ein Streifen ein erstes Polfeld und ein zweites Polfeld umfasst, wobei das Verhältnis der Länge des zweiten Polfelds zur Länge des ersten Polfelds in der zweiten Richtung für unterschiedliche Streifen variiert.

Der Absolutpositionsbestimmungsbereich wird dazu verwendet, eine Absolutposition des Sensorkopfs zu bestimmen, wobei die Auflösung begrenzt ist. Der Inkrementalpositionsbestimmungsbereich wird dazu benutzt, um insbesondere über eine analoge Wegmessung bzw. Positionsmessung eine erhöhte Auflösung ausgehend von der ermittelten Absolutposition zu bestimmen, um entsprechend eine Absolutposition mit hoher Auflösung zu erreichen. Es wird dadurch ein absolutes System mit erhöhter Genauigkeit bereitgestellt.

Bei der erfindungsgemäßen Lösung ist auch eine Kodierung in der zweiten Richtung vorgesehen. Über die entsprechende Sensorauflösung der zweiten Sensoreinrichtung in der zweiten Richtung lässt sich dadurch die Absolutposition bestimmen. Über zusätzliche Auswertung einer Inkrementalposition ausgehend von dieser Absolutposition in der ersten Richtung lässt sich die Absolutposition des Sensorkopfs relativ zu dem Maßkörper mit hoher Genauigkeit ermitteln.

In dem Absolutpositionsbestimmungsbereich lässt sich in der zweiten Richtung bezogen auf eine Breite in der ersten Richtung eine Mehrzahl von (unterschiedlichen) Polfeldern (entsprechend Bits) kodieren. Dadurch ist es möglich, die Anzahl der benötigten Sensoren im Sensorkopf gering zu halten. Dadurch lässt sich ein Sensorkopf mit kleinerem Gehäuse realisieren. Der Sensorkopf und damit das System lässt sich kostengünstiger herstellen und montieren und man erhält eine höhere Ausfallsicherheit.

Wenn weniger Sensoren benötigt werden, lassen sich diese auch auf einer kürzeren Länge in der ersten Richtung anordnen. Dadurch wiederum erhält man eine größere Winkeltoleranz bei der Montage um eine Achse senkrecht zum Maßkörper. Da weniger Sensoren benötigt werden, ist der Montageaufwand reduziert. Montagetoleranzen lassen sich leichter in einem Kalibrierschritt kompensieren.

Da wiederum weniger Sensoren benötigt werden, lassen sich größere Längen in der ersten Richtung absolut erfassen.

Die oben genannten Vorteile lassen sich realisieren, ohne dass die Länge des Maßkörpers in der zweiten Richtung erhöht werden muss.

Es ist grundsätzlich auch möglich, einen Versatz oder eine Verdrehung des Sensorkopfs relativ zum Maßkörper messtechnisch zu erfassen.

Bei der erfindungsgemäßen Lösung erfolgt zusätzlich zu einer "parallelen" Messung durch die erste Sensoreinrichtung eine "orthogonale" Messung durch die zweite Sensoreinrichtung, um die Absolutposition zu ermitteln. Entsprechend ist eine magnetische Kodierung in der zweiten Richtung vorgesehen, wobei diese Kodierung durch entsprechende Verteilung von Polfeldern in der ersten Richtung variiert. Die Sensorauflösung in der ersten Richtung bzw. zweiten Richtung entspricht einer Messbarkeit der entsprechenden Sensoreinrichtung in der jeweiligen Richtung.

Die Kodierung ist magnetisch, wobei dann entsprechend die erste Sensoreinrichtung und die zweite Sensoreinrichtung ausgebildet sind und eine Magnetfeldauflösung als Sensorauflösung aufweisen. Eine magnetische Kodierung lässt sich auf einfache Weise durch entsprechende magnetisierte Bereiche erreichen.

Insbesondere umfasst der Maßkörper Polfelder eines ersten Typs und eines zweiten Typs, wobei die Anordnung und Verteilung der Polfelder die Funktionsweise des Positions-/Wegmesssystems bestimmt. Der erste Typ unterscheidet sich von dem zweiten Typ und dieser Unterschied ist durch die Sensoreinrichtungen erkennbar. Bei einer magnetischen Kodierung ist der erste Typ beispielsweise der Typ Nordpol und der zweite Typ ist der Typ Südpol.

Der Sensorkopf ist dabei in einer dritten Richtung, welche quer und insbesondere senkrecht zur ersten Richtung und quer und insbesondere senkrecht zur zweiten Richtung liegt, beabstandet zum Maßkörper. Dadurch ist ein berührungsloses Messsystem mit einem Luftspalt zwischen dem Sensorkopf und dem Maßkörper mit der Kodierung erreicht.

Insbesondere ist die erste Richtung eine Messrichtung für die Weg-Positionsbestimmung des Sensorkopfs relativ zum Maßkörper.

Vorteilhafterweise sind in dem Inkrementalpositionsbestimmungsbereich Polfelder unterschiedlichen Typs alternierend angeordnet. Dadurch lässt sich ausgehend von einer ermittelten Absolutposition (ermittelt über den Absolutpositionsbestimmungsbereich) die Auflösung durch eine insbesondere analoge Weg-Positionsmessung an dem Inkrementalpositionsbestimmungsbereich erhöhen.

Grundsätzlich sind der Absolutpositionsbestimmungsbereich und der Inkrementalpositionsbestimmungsbereich in der zweiten Richtung nebeneinander angeordnet oder sind miteinander kombiniert. Beispielsweise bilden der Absolutpositionsbestimmungsbereich und der Inkrementalpositionsbestimmungsbereich parallel nebeneinander liegende Spuren. Es ist grundsätzlich auch durch eine Kombination möglich, dass beispielsweise ein Polfeld des Inkrementalpositionsbestimmungsbereichs in ein Polfeld des Absolutpositionsbestimmungsbereichs übergeht.

Polfelder des Inkrementalpositionsbestimmungsbereichs und Polfelder des Absolutpositionsbestimmungsbereichs (mit oder ohne Abstand) in der zweiten Richtung sind nebeneinander angeordnet.

Ein oder mehrere Polfelder des Inkrementalpositionsbestimmungsbereichs und ein oder mehrere Polfelder des Absolutpositionsbestimmungsbereichs sind in einem Streifen angeordnet und der Maßkörper umfasst eine Mehrzahl von in der ersten Richtung nebeneinander angeordneten Streifen. Dadurch lässt sich auf einfache Weise ein Inkrementalpositionsbestimmungsbereich und ein Absolutpositionsbestimmungsbereich mit einer Kodierung in der ersten Richtung und einer Kodierung in der zweiten Richtung realisieren.

Günstig ist es dabei, wenn in der ersten Richtung gegenüberliegende (reelle oder gedachte) Streifenbegrenzungslinien parallel zueinander sind. Dadurch ergibt sich eine einfache Auswertbarkeit.

Ein Streifen umfasst ein erstes Polfeld und ein zweites Polfeld, wobei das Verhältnis der Länge des zweiten Polfelds zur Länge des ersten Polfelds in der zweiten Richtung für unterschiedliche Streifen variiert. Dadurch ist eine Kodierung in der zweiten Richtung auf einfache Weise realisierbar.

Insbesondere weisen dabei das erste Polfeld und das zweite Polfeld unterschiedliche Typen (wie entgegengesetzte magnetische Polung) auf, um eine entsprechende Kodierung (wie magnetische Kodierung) bereitzustellen.

Es ist vorteilhaft, wenn die unterschiedlichen Längen in diskreten Stufen gebildet sind. Dadurch lässt sich auf einfache Weise eine Kodierung erreichen, wobei diese Kodierung auf einfache Weise herstellbar ist.

Bei einer Ausführungsform weist das erste Polfeld, welches mindestens teilweise den Inkrementalpositionsbestimmungsbereich bildet, für unterschiedliche Streifen unterschiedliche Längen auf. Alternativ ist es möglich, dass das erste Polfeld und das zweite Polfeld für alle Streifen die gleiche Länge aufweisen.

Bei einer Ausführungsform weist ein Streifen nicht-kodierte Bereiche auf. Durch entsprechende Anordnung und/oder Längenausbildung der nicht-kodierten Bereiche in der zweiten Richtung für unterschiedliche Streifen lässt sich eine Kodierung bilden, wenn entsprechend diese Anordnung bzw. diese Längen variieren.

Es ist auch möglich, dass ein Streifen eine Mehrzahl von Polfeldern unterschiedlicher Polung aufweist, wobei bei unterschiedlichen Streifen diese Polfelder in unterschiedlichen Positionen in der zweiten Richtung angeordnet sind und diese Polfelder den Absolutpositionsbestimmungsbereich mindestens teilweise bilden. Es lässt sich dadurch eine Kodierung bilden, indem der Absolutpositionsbestimmungsbereich eine Mehrzahl von Polfeldern aufweist. Bei einer solchen Ausgestaltung ist es beispielsweise auch auf einfache Weise möglich, durch entsprechende Signalauswertung, wenn eine Mehrzahl von Sensoren vorgesehen ist, eine Verdrehung oder eine Verkippung des Sensorkopfs zu detektieren.

Es ist dabei möglich, dass ein Streifen Polfelder unterschiedlichen Typs (wie unterschiedlicher magnetischer Polung) aufweist, welche in der ersten Richtung aufeinanderfolgend angeordnet sind. Diese Polfelder bilden dabei insbesondere Polfelder des Inkrementalpositionsbestimmungsbereichs.

Es ist auch möglich, dass durch die Polfelder des Absolutpositionsbestimmungsbereichs über Verteilung von Polfeldern des ersten Typs zum zweiten Typ eine digitale Kodierung gebildet ist. Ein Polfeld des ersten Typs ist ein Digit (beispielsweise 0) zugeordnet und ein Polfeld des zweiten Typs ist ein Digit (beispielsweise 1) zugeordnet. Die Abfolge der Polfelder ergibt dann eine digitale Kodierung beispielsweise eines Streifens, in dem die Polfelder angeordnet sind. Über die zweite Sensoreinrichtung lässt sich die digitale Kodierung auslesen und dadurch, wenn unterschiedliche Streifen eine unterschiedliche digitale Kodierung aufweisen, die Absolutposition mit begrenzter Auflösung (vorgegeben durch die Polbreite) bestimmen.

Insbesondere ist die zweite Sensoreinrichtung so ausgebildet, dass in einer zweiten Richtung n unterschiedliche Stufen entsprechend einer Anordnung und/oder Verteilung von Polfeldern erkennbar sind. Dadurch lässt sich durch die zweite Sensoreinrichtung die Kodierung auslesen und dadurch wiederum lässt sich die absolute Position (mit begrenzter Auflösung) ermitteln.

Es ist dabei grundsätzlich möglich, dass die zweite Sensoreinrichtung eine Mehrzahl von Sensoren aufweist. Eine Mehrzahl von Sensoren kann vorgesehen sein, um einen entsprechenden Code (wie magnetischen Code) auszulesen.

Dazu sind bei einer Ausführungsform eine Mehrzahl von Sensoren in der ersten Richtung beabstandet angeordnet. Dadurch lässt sich entsprechend die Kodierung in der zweiten Richtung auslesen.

Es ist alternativ oder zusätzlich möglich, dass eine Mehrzahl von Sensoren in einer Reihe angeordnet ist, welche parallel zur zweiten Richtung ist. Es ist dabei ein Sensor einem bestimmten Polfeldbereich zugeordnet und über diesen Sensor wird dann ermittelt, ob ein Polfeld vom ersten Typ (wie Nordpol) oder zweiten Typ (wie Südpol) ist. Dadurch lässt sich ein entsprechender Code wie beispielsweise ein digitaler Code auslesen.

Vorteilhaft ist es, wenn der Abstand benachbarter Sensoren in der ersten Richtung größer oder kleiner ist als eine Polfeldbreite von Polfeldern in der ersten Richtung. Der Abstand benachbarter Sensoren ist dadurch inkomensurabel zu der Anordnung von Polfeldern. Durch die entsprechende Beabstandung benachbarter Sensoren wird verhindert, dass alle Sensoren zwischen benachbarten Polfeldern liegen können. Dies erhöht die Genauigkeit der Messung. Alternativ können die Sensoren auch paarweise in einem Winkelversatz bezogen auf eine Periode der (orthogonalen) Polteilung positioniert sein. Bevorzugt sind hier 180°.

Zur Messauflösung in der zweiten Richtung kann die zweite Sensoreinrichtung mindestens eine Reihe von Sensoren umfassen, welche in der zweiten Richtung nebeneinander angeordnet sind, und/oder mindestens einen Sensor umfassen, welcher Magnetfeldwinkel ermittelt (bei magnetischer Kodierung) und/oder mindestens einen analogen Weg-/Positionssensor umfassen, welcher einen Weg oder eine Position in der zweiten Richtung ermittelt. Es lässt sich dadurch die Kodierung in der zweiten Richtung auslesen, um die absolute Position zu bestimmen.

Die erste Sensoreinrichtung kann dabei mindestens einen analogen Weg-/Positionssensor umfassen, durch welchen ein Weg oder eine Position in der ersten Richtung ermittelbar ist, um entsprechend die absolute Position ausgehend von einer vorermittelten Absolutposition mit erhöhter Auflösung bestimmen zu können.

Grundsätzlich kann auch eine dritte Sensoreinrichtung vorgesehen sein, welche eine Sensorauflösung in einer dritten Richtung quer zur ersten Richtung und quer zur zweiten Richtung aufweist. Dadurch lassen sich beispielsweise Verkippungen erkennen.

Die nachfolgende Beschreibung bevorzugter Ausführungsformen dient im Zusammenhang mit den Zeichnungen der näheren Erläuterung der Erfindung.
Es zeigen:
- Figur 1: eine schematische Darstellung einer Ausführungsform eines erfindungsgemäßen Positions-/Wegmesssystems mit einem Maßkörper und einem Sensorkopf;
- Figur 2: eine schematische Darstellung eines ersten Ausführungsbeispiels eines erfindungsgemäßen Positions-/Wegmesssystems;
- Figur 3: eine schematische Darstellung eines zweiten Ausführungsbeispiels eines erfindungsgemäßen Positions-/Wegmesssystems mit einem Maßkörper und einem Sensorkopf;
- Figur 4(a): eine schematische Darstellung eines dritten Ausführungsbeispiels eines erfindungsgemäßen Positions-/Wegmesssystems mit einem Maßkörper und einem Sensorkopf;
- Figur 4(b): eine schematische Darstellung einer Variante eines dritten Ausführungsbeispiels eines erfindungsgemäßen Positions-/Wegmesssystems mit einem Maßkörper und einem Sensorkopf;
- Figur 5: eine schematische Teildarstellung eines Maßkörpers eines vierten Ausführungsbeispiels;
- Figur 6: eine Teildarstellung eines Maßkörpers eines fünften Ausführungsbeispiels;
- Figur 7: eine schematische Darstellung eines sechsten Ausführungsbeispiels eines erfindungsgemäßen Positions-/Wegmesssystems;
- Figur 8: eine schematische Darstellung eines siebten Ausführungsbeispiels eines erfindungsgemäßen Positions-/Wegmesssystems;
- Figur 9: eine schematische Darstellung eines achten Ausführungsbeispiels eines erfindungsgemäßen Positions-/Wegmesssystems; und
- Figur 10: eine schematische Darstellung eines neunten Ausführungsbeispiels eines erfindungsgemäßen Positions-/Wegmesssystems.

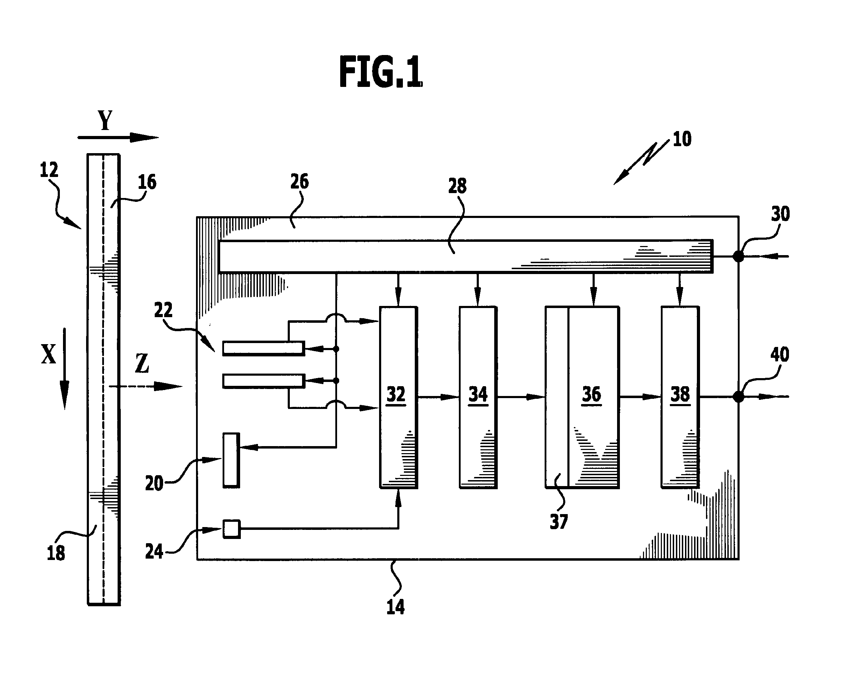

Eine Ausführungsform eines erfindungsgemäßen Positions-/Wegmesssystems, welche in Figur 1 schematisch gezeigt und dort mit 10 bezeichnet ist, umfasst einen Maßkörper 12, welcher magnetisch kodiert ist. Der Maßkörper 12 selber weist einen Träger auf, auf welchem die magnetische Kodierung angeordnet ist. Die magnetische Kodierung ist beispielsweise durch ein Kunststoffband gebildet, welches flexibel ist und magnetisierbar ist. Die Kodierung des Maßkörpers 12 erfolgt durch eine entsprechende abwechselnde Anordnung von Polfeldern des Typs Nordpol und Polfeldern des Typs Südpol.

Die magnetischen Feldlinien dieser Polfelder bilden ein dreidimensionales Vektorfeld. In diesem Feld ist ein Sensorkopf 14 angeordnet.

Der Maßkörper 12 erstreckt sich in einer ersten Richtung x und in einer zweiten Richtung y, welche quer und insbesondere senkrecht zur ersten Richtung x ist. Die erste Richtung x ist eine Messrichtung, in welcher die Position bzw. der Weg des Sensorkopfs 14 relativ zum Maßkörper 12 ermittelbar ist. Der Sensorkopf 14 ist in einer dritten Richtung z beabstandet zu dem Maßkörper 12, wobei die dritte Richtung quer und insbesondere senkrecht zur ersten Richtung x ist und quer und insbesondere senkrecht zur zweiten Richtung y ist.

Wie weiter untenstehend noch erläutert wird, umfasst der Maßkörper 12 einen Absolutpositionsbestimmungsbereich 16, welcher entsprechend magnetisch kodiert ist, und einen Inkrementalpositionsbestimmungsbereich 18, welcher ebenfalls entsprechend kodiert ist. Über den Absolutpositionsbestimmungsbereich 16 lässt sich die absolute Position des Sensorkopfs 14 in der Richtung x am Maßkörper 12 bestimmen, wobei die Auflösung begrenzt ist. Der Inkrementalpositionsbestimmungsbereich 18 dient zur Vergrößerung der Auflösung.

Der Sensorkopf umfasst eine Mehrzahl von Sensoren. Bei der erfindungsgemäßen Lösung umfasst der Sensorkopf 14 eine erste Sensoreinrichtung 20 mit einem oder mehreren Sensoren, welche eine Magnetfeldauflösung in der ersten Richtung x aufweisen. Die erste Sensoreinrichtung 20 ist dem Inkrementalpositionsbestimmungsbereich 18 zugeordnet.

Ferner umfasst der Sensorkopf 14 eine zweite Sensoreinrichtung 22 mit einem oder mehreren Sensoren, welche eine Magnetfeldauflösung in der zweiten Richtung y aufweisen. Die zweite Sensoreinrichtung 22 ist dem Absolutpositionsbestimmungsbereich 16 zugeordnet.

Es kann eine dritte Sensoreinrichtung 24 vorgesehen sein, welche eine Magnetfeldauflösung in der dritten Richtung z aufweist. Durch die dritte Sensoreinrichtung 24 lassen sich beispielsweise Verkippungen des Sensorkopfs 14 relativ zum Maßkörper 12 detektieren.

Die Sensoreinrichtungen 20, 22, 24 sind in einem Gehäuse 26 angeordnet. In dem Gehäuse 26 ist eine Stromversorgungseinrichtung 28 für die Sensoreinrichtungen 20, 22, 24 positioniert. Der Stromversorgungseinrichtung 28 sind ein oder mehrere externe Anschlüsse 30 für eine externe Stromversorgung zugeordnet. Fakultativ kann der Stromversorgungseinrichtung 28 auch eine an dem Sensorkopf 14 angeordnete Stromquelle zugeordnet sein oder eine Empfangseinrichtung für eine drahtlose Stromversorgung.

Den Sensoreinrichtungen 20, 22, 24 ist ein Verstärker 32 nachgeordnet, welcher ebenfalls in dem Gehäuse 26 positioniert ist. Die Sensoreinrichtungen 20, 22, 24 stellen ihre Signale dem Verstärker 32 bereit, in dem sie verstärkt werden.

Es ist auch möglich, dass dem Verstärker 32 ein Analog/Digital-Wandler nachgeordnet ist, welcher analoge Signale der Sensoreinrichtungen in digitale Signale wandelt.

Es ist grundsätzlich auch möglich, dass eine oder mehrere Sensoreinrichtungen bereits digitale Signale bereitstellen. In diesem Fall ist kein Analog/Digital-Wandler 34 notwendig.

Die verstärkten und gegebenenfalls gewandelten Signale werden einer Auswerteeinrichtung 36 bereitgestellt. Diese ist insbesondere durch einen Mikrocontroller (oder ASIC oder DSP usw.) gebildet. Sie kann dabei einen Interpolator 37 umfassen.

Die Auswerteeinrichtung 36 stellt die entsprechenden Signale einer Signalanpassungseinrichtung 38 bereit, wobei diese Signale an einem Ausgang 40 des Sensorkopfs 14 abgreifbar sind. Es kann dabei eine drahtlose Signalübertragung oder eine Leitungsübertragung von entsprechenden Auswertungssignalen erfolgen.

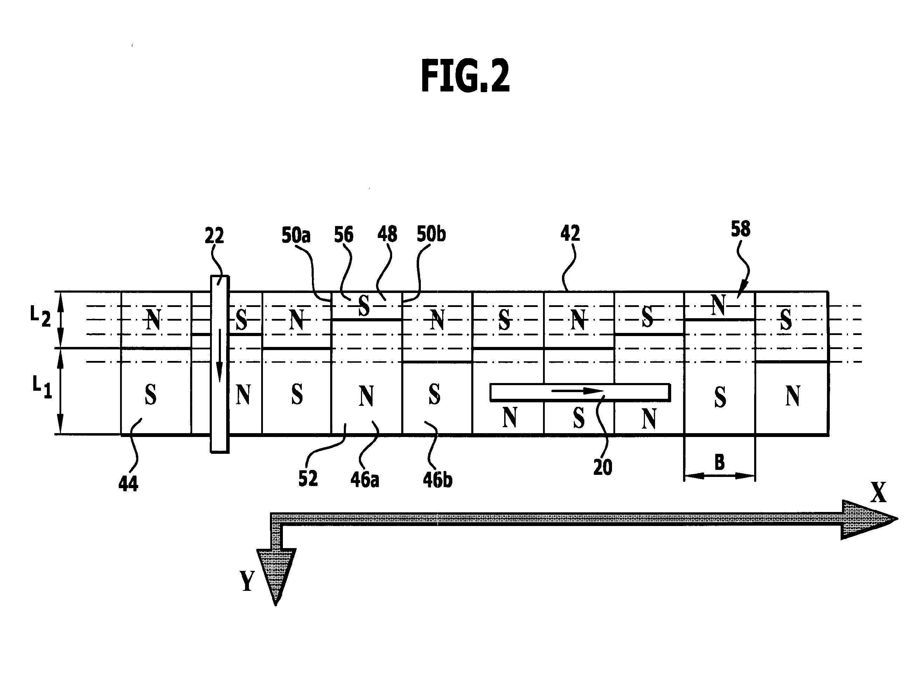

Ein erstes Ausführungsbeispiel eines erfindungsgemäßen Positions-/Wegmesssystems umfasst einen Maßkörper 42 (Figur 2). Der Maßkörper 42 weist einen Inkrementalpositionsbestimmungsbereich 44 auf. Der Inkrementalpositionsbestimmungsbereich 44 umfasst Polfelder 46a vom Typ Nordpol und Polfelder 46b vom Typ Südpol. Diese Polfelder sind in der ersten Richtung x alternierend angeordnet. Benachbarte Polfelder 46a, 46b weisen dabei eine unterschiedliche Polung auf und übernächst benachbarte Polfelder weisen die gleiche Polung auf.

Die Polfelder 46a, 46b weisen eine Breite B in der ersten Richtung x auf. Die Polfelder 46a, 46b des Inkrementalpositionsbestimmungsbereichs 44 bilden eine Inkrementalspur, wobei alle Polfelder 46a, 46b des Inkrementalpositionsbestimmungsbereichs 44 die gleiche Breite B haben.

Über die alternierende Anordnung der Polfelder 46a, 46b ist eine magnetische Kodierung gebildet.

Die jeweiligen Polfelder 46a, 46b sind in einem jeweiligen Streifen 48 angeordnet. Die Streifen 48 erstrecken sich dabei in der zweiten Richtung y und weisen gegenüberliegende (gedachte) Streifenbegrenzungslinien 50a, 50b auf, welche in der ersten Richtung x beabstandet sind und parallel zur zweiten Richtung y ausgerichtet sind.

Die jeweiligen Streifen 48 umfassen ein erstes Polfeld 52, welches das entsprechende Polfeld 46a bzw. 46b des Inkrementalpositionsbestimmungsbereichs 44 ist, und ein zweites Polfeld 56, welches einem Absolutpositionsbestimmungsbereich 58 zugeordnet ist. Das zweite Polfeld 56 weist dabei eine entgegengesetzte Polung zu dem ersten Polfeld 52 auf. Das erste Polfeld 52 und das zweite Polfeld 56 bilden gemeinsam den Absolutpositionsbestimmungsbereich 58.

Das erste Polfeld 52 weist eine Länge L₁ in der zweiten Richtung y auf und das zweite Polfeld 56 eines Streifens 48 weist eine Länge L₂ in der zweiten Richtung y auf. Die Länge L₁ des ersten Polfelds 52 beträgt dabei beispielsweise mindestens 50 % der Gesamtlänge L₁ + L₂ eines Streifens 48. Über die 50 %-Länge des ersten Polfelds 52 ist der Inkrementalpositionsbestimmungsbereich 44 gebildet. Die verbleibende "Restlänge" (einschließlich der Restlänge Null) trägt bei zur Bildung des Absolutpositionsbestimmungsbereichs 58.

In unterschiedlichen Streifen variiert das Verhältnis der Länge L₂ zu L₁. Durch diese Längenvariation ist in der zweiten Richtung y eine magnetische Kodierung gebildet.

Insbesondere ist die Längenvariation von L₁ und damit auch von L₂ diskret ausgebildet und erfolgt in diskreten Stufen. Beispielsweise sind dazu n diskrete Stufen vorgesehen. Das zweite Polfeld 56 kann dadurch n unterschiedliche Längen aufweisen von L₂ = 0 bis L₂ = n mal die Länge einer individuellen Stufe in der zweiten Richtung y.

Die zweite Sensoreinrichtung 22 weist eine Magnetfeldauflösung in der zweiten Richtung y auf. Wenn unterschiedliche Streifen 48 eine unterschiedliche Polfeldausbildung bezüglich der Längen L₁ und L₂ haben, dann kann über die zweite Sensoreinrichtung 22 detektiert werden, welcher spezielle Streifen vorliegt, und dadurch kann eine Absolutpositionsbestimmung erfolgen.

Durch die erste Sensoreinrichtung 20 kann über die Magnetfeldauflösung in der ersten Richtung x die Gesamtauflösung verbessert werden, indem an den Polfeldern 46a, 46b eine Inkrementalmessung durchgeführt wird. Die absolute Position wird bestimmt gemäß Polnummer · Polbreite (im Absolutpositionsbestimmungsbereich 58) + Inkrementalposition.

Die Magnetfeldauflösung in der zweiten Richtung y über die zweite Sensoreinrichtung 22 kann auf verschiedene Weise erfolgen. Beispielsweise umfasst die zweite Sensoreinrichtung 22 eine Mehrzahl von Sensoren, welche in der zweiten Richtung y in einer Reihe angeordnet sind. Für den Absolutpositionsbestimmungsbereich 58 sind dabei diese Sensoren entsprechend auf eine mögliche Unterbreite ausgerichtet, d. h. auf eine Stufe ausgerichtet. Wenn die zweiten Polfelder 56 in n mögliche Stufen unterteilt sind, dann umfasst eine Reihe (mindestens) n Sensoren, welche entsprechend ausgerichtet sind. Diese Sensoren können dann beispielsweise ein digitales Signal bereitstellen.

Es ist auch möglich, dass die zweite Sensoreinrichtung 22 (mindestens) einen magnetfeldsensitiven Sensor aufweist, welcher Magnetfeldwinkel ermitteln kann und dadurch eine Magnetfeldauflösung in der zweiten Richtung y hat, um so wiederum eine Absolutpositionsbestimmung entsprechend der Kodierung der Streifen 48 zu erhalten.

Es ist grundsätzlich auch möglich, dass die zweite Sensoreinrichtung 22 (mindestens) einen magnetfeldsensitiven Sensor aufweist, welcher eine analoge Wegbestimmung bzw. Positionsbestimmung in der zweiten Richtung y ermöglicht und dadurch eine entsprechende Magnetfeldauflösung in der zweiten Richtung y ermöglicht.

Die erste Sensoreinrichtung 20 und die zweite Sensoreinrichtung 22 sind in einem Sensorkopf angeordnet. Dieser Sensorkopf ist in Figur 2 als Ganzes nicht gezeigt.

Die erste Sensoreinrichtung 20 umfasst beispielsweise einen analogen magnetfeldsensitiven Weg-/Positionssensor, welcher eine entsprechende Auflösung in der ersten Richtung x aufweist, um über die Inkrementalposition ausgehend von der Absolutposition, welche mittels des Absolutpositionsbestimmungsbereichs 58 an der zweiten Sensoreinrichtung 22 bestimmt wird, eine höhere Auflösung für die Positionsbestimmung bzw. Wegbestimmung des Sensorkopfs 14 an dem Maßkörper 42 zu ermöglichen.

Die erste Sensoreinrichtung 20 umfasst beispielsweise einen ersten Magnetfeldsensor und einen zweiten Magnetfeldsensor, welche um 90° phasenversetzte Signale ausgeben. Solche Magnetfeldsensoren werden auch als Sinussensor und Cosinussensor bezeichnet.

Bei der erfindungsgemäßen Lösung ist zusätzlich zu der ersten Sensoreinrichtung 20 und dem Sensorkopf 14 mindestens ein orthogonaler Sensor der zweiten Sensoreinrichtung 22 vorgesehen, durch welchen sich eine magnetische Kodierung in der Querrichtung zur ersten Richtung x, nämlich in der zweiten Richtung y, auswerten lässt. In dieser "Querkodierung" ist über die Kodierung für die Nummer des aktuellen Pols das absolute Positionssignal enthalten.

Die zweiten Polfelder 56 des Absolutpositionsbestimmungsbereichs 58 bilden eine Absolutspur. Bei dem in Figur 2 gezeigten Ausführungsbeispiel liegt diese Absolutspur direkt neben der Inkrementalspur mit einem abstandsfreien Übergang.

An jedem Inkrement der Inkrementspur in der ersten Richtung x lassen sich in der Absolutspur in der zweiten Richtung y mehrere Bits n kodieren. Dadurch lässt sich grundsätzlich die Anzahl der benötigten Sensoren reduzieren. Bei n Bits und m Sensoren sind n^{m} eindeutige Werte über diese Sensoren darstellbar. Insbesondere ist dabei n größer als 2.

Durch eine höhere Basis als 2 (n größer 2) werden weniger Sensoren für eine bestimmte Länge benötigt. Dadurch lässt sich das Gehäuse des Sensorkopfs 14 verkleinern. Weniger Sensoren erlauben es, das Positions-/Wegmesssystem 10 kostengünstiger herzustellen und man erhält auch eine höhere Ausfallsicherheit.

Wenn weniger Sensoren auf einer kürzeren Länge angeordnet sind, ist eine größere Winkeltoleranz bei der Montage um eine Achse senkrecht zum Maßkörper 12 zulässig. Der Montageaufwand ist reduziert. Montagetoleranzen lassen sich auch leichter in einem Kalibrierschritt kompensieren.

Es können auch größere Längen in der ersten Richtung x absolut erfasst werden, da weniger Sensoren benötigt werden.

Die Breite des Maßkörpers 12 in der zweiten Richtung y muss nicht erhöht werden. Beispielsweise reicht eine Breite in der zweiten Richtung y von 10 mm aus.

Grundsätzlich ist es sogar möglich, einen Versatz des Gehäuses 26 des Sensorkopfs 14 zum Maßkörper 12 messtechnisch (mit mehreren Sensoren) zu erfassen. Auch eine Verdrehung des Sensorkopfs 14 um eine Achse parallel zur dritten Richtung z ist möglich.

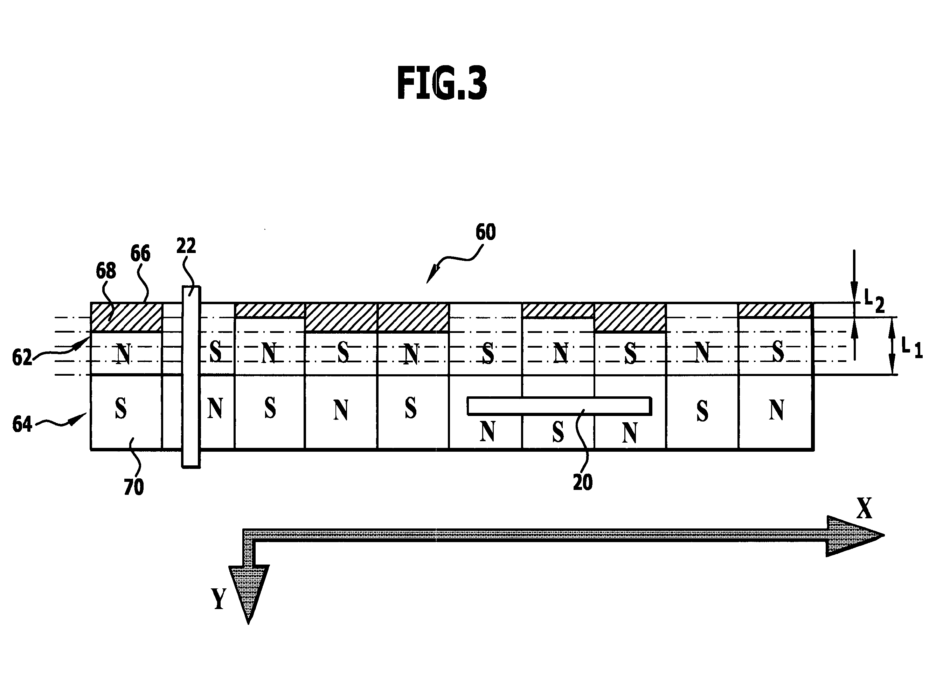

Bei einem zweiten Ausführungsbeispiel, welches in Figur 3 schematisch dargestellt ist, ist ein Maßkörper 60 vorgesehen, welcher einen Absolutpositionsbestimmungsbereich 62 und einen Inkrementalpositionsbestimmungsbereich 64 umfasst. Der Absolutpositionsbestimmungsbereich 62 und der Inkrementalpositionsbestimmungsbereich 64 sind dabei parallel nebeneinander angeordnet ohne Abstand dazwischen. Der Inkrementalpositionsbestimmungsbereich 64 umfasst alternierend gepolte Polfelder, wobei die Polfelder die gleiche Breite in der ersten Richtung x und die gleiche Breite in der Höhe y aufweisen.

Der Absolutpositionsbestimmungsbereich 62 umfasst Polfelder 66, welche eine unterschiedliche Länge in der zweiten Richtung y aufweisen. In dem Absolutpositionsbestimmungsbereich 62 sind dabei neben manchen Polfeldern (wie beispielsweise dem Polfeld 66) nicht-magnetische Bereiche 68 angeordnet. Polfelder 66 weisen eine Länge L₁ in der zweiten Richtung y auf. Die nicht-magnetischen Bereiche 68 weisen eine Länge L₂ in der zweiten Richtung y auf. Unterschiedliche Streifen, welche über ein Polfeld 70 des Inkrementalpositionsbestimmungsbereichs 64 und das in der zweiten Richtung y benachbarte Polfeld 66 gebildet sind, weisen ein variierendes Längenverhältnis L₂ zu L₁ auf. Dadurch ist eine magnetische Kodierung in der zweiten Richtung y gebildet.

Das Polfeld 66 eines Streifens 70 weist dabei eine umgekehrte Polung im Vergleich zu dem entsprechenden Polfeld des Inkrementalpositionsbestimmungsbereichs 64 auf.

Bei dem gezeigten Ausführungsbeispiel sind die nicht-magnetischen Bereiche 68, wenn ein entsprechender Streifen 70 einen solchen nicht-magnetischen Bereich 68 aufweist, an einem dem Inkrementalpositionsbestimmungsbereich 64 abgewandten Außenrand angeordnet.

Es ist grundsätzlich auch möglich, dass die nicht-magnetischen Bereiche 68 zwischen dem Außenrand und den Polfeldern der Inkrementalspur verteilt angeordnet sind.

Die Länge L₁ der Polfelder 66 in dem Absolutpositionsbestimmungsbereich 62 und die Länge L₂ der nicht-magnetischen Bereiche 68 sind "quantisiert" in n Stufen.

Durch die Verteilung und Längenvariation der Polfelder 66 und der nicht-magnetischen Bereiche 68 in dem Absolutpositionsbestimmungsbereich 62 ergibt sich die magnetische Kodierung in der zweiten Richtung y.

Ansonsten funktioniert das Positions-/Wegmesssystem wie oben beschrieben.

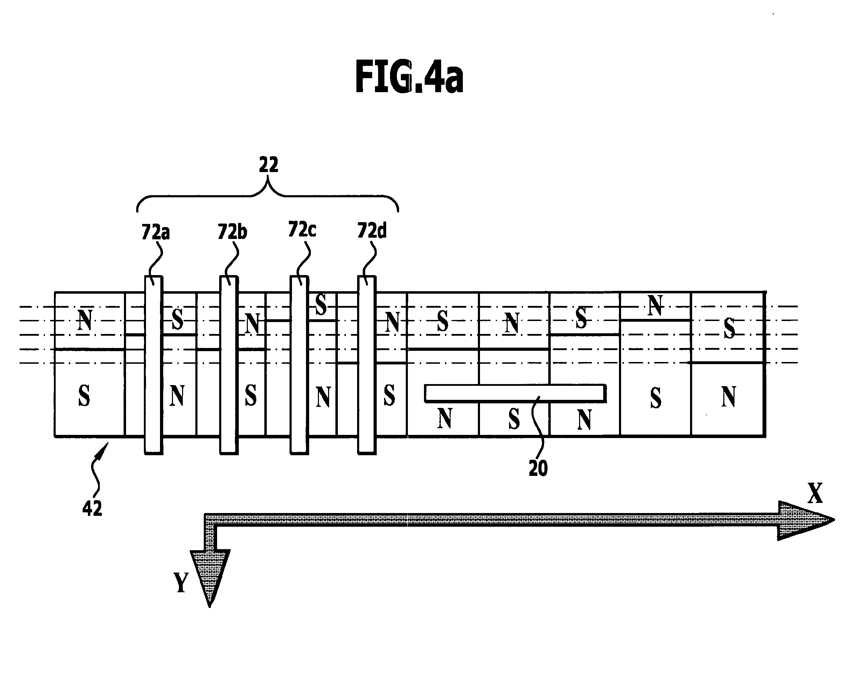

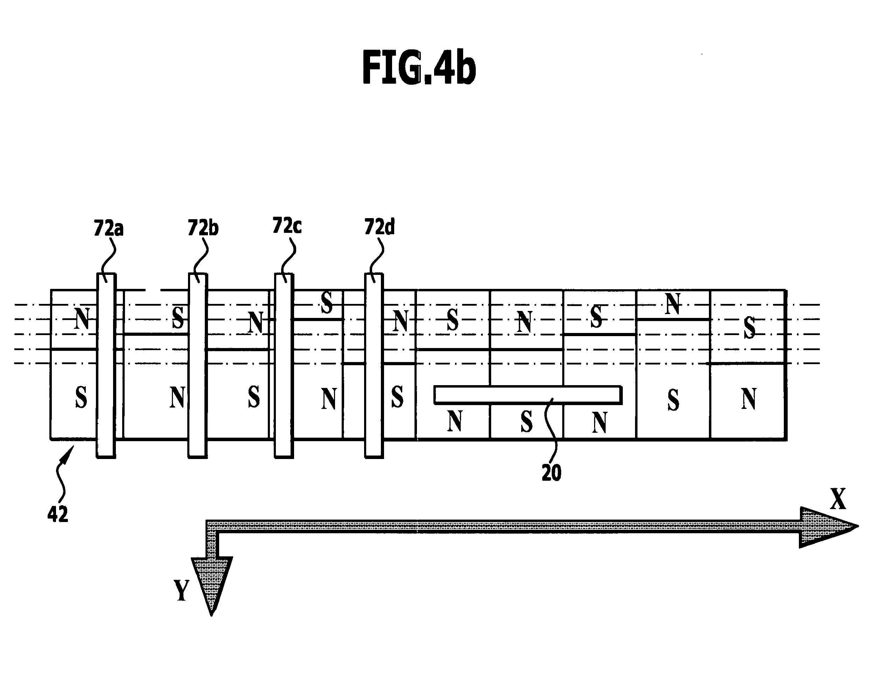

Grundsätzlich ist es so, dass die zweite Sensoreinrichtung 22 eine Mehrzahl von in der ersten Richtung x beabstandeten Sensoren 72a, 72b usw. aufweisen kann bzw. in dieser ersten Richtung x beabstandete Sensorreihen (Figuren 4(a), 4(b)). Dadurch ergibt sich, wenn der Absolutpositionsbestimmungsbereich 58 n Stufen hat bei m Sensoren 72a, 72b usw. eine Kodierbarkeit von mⁿ Polfeldern.

Bei dem Ausführungsbeispiel gemäß Figur 4(a), welches den Maßkörper 42 aufweist und bei dem fünf Stufen im Absolutpositionsbestimmungsbereich 58 vorgesehen sind, lassen sich bei der Verwendung von vier Sensoren 72a usw. der zweiten Sensoreinrichtung 22 4⁵ = 1024 Polfelder kodieren.

Grundsätzlich ist es so, dass im Einschaltzeitpunkt des Positions-/Wegmesssystems 10 bei jeder Position die absolute Position erkannt werden sollte. Wenn ein Sensor der zweiten Sensoreinrichtung 22 sich genau zwischen benachbarten Polfeldern befindet und insbesondere, wenn mehrere Sensoren 72a, 72b vorhanden sind, sich alle Sensoren zwischen benachbarten Polfeldern befinden, dann ist dies nicht möglich. Es ist deshalb vorteilhaft, wenn ein Abstand der Sensoren 72a, 72b inkomensurabel zur Polfeldperiode in der ersten Richtung x ist. Insbesondere ist dazu der Abstand benachbarter Sensoren 72a, 72b usw. größer als eine Polfeldbreite B in der ersten Richtung x.

Es ist auch möglich, eine zweite Sensorreihe vorzusehen, die um eine halbe Polbreite zur ersten Reihe versetzt ist. Es ist dann entweder die erste Reihe genau auf der Mitte zwischen den Polen angeordnet, oder die zweite Reihe ist derart angeordnet. Die Reihe auf der Mitte darf für die Bestimmung der Polnummer nicht benutzt werden. Die Entscheidung, welche Reihe gültig ist, kann nur über einen entsprechenden Inkrementalsensor getroffen werden, welcher die Position im Pol kennt.

Bei dem in Figur 4(b) gezeigten Ausführungsbeispiel erkennt im Einschaltzeitpunkt der Sensor 72b kein korrektes Signal, da er sich genau zwischen zwei benachbarten Polfeldern befindet. Sein entsprechendes Signal darf bei der Auswertung nicht berücksichtigt werden. Durch die erste Sensoreinrichtung 20, welche entsprechende Signale bereitstellt, weiß die Auswerteeinrichtung 36, welcher Sensor der zweiten Sensoreinrichtung 22 bei der Positionsbestimmung nicht berücksichtigt werden darf. Dadurch lassen sich Fehler aufgrund von Sensoren, welche bei der Auswertung nicht berücksichtigt werden dürfen, vermeiden.

Bei dem Positions-/Wegmesssystem mit den Maßkörpern 42 und 60 weist jeder Streifen 48 genau zwei Polfelder mit unterschiedlicher Polung auf. Die Länge des entsprechenden zweiten Polfelds 56 bzw. des Polfelds 66 in der zweiten Richtung y kann zur Bildung einer magnetischen Kodierung in der zweiten Richtung y variieren. Bei dem Maßkörper 60 werden zusätzlich noch nicht-magnetische Bereiche 68 vorgesehen.

Es ist grundsätzlich auch möglich, dass ein Streifen zur Bildung eines Absolutpositionsbestimmungsbereichs eine Mehrzahl von Polfeldern aufweist.

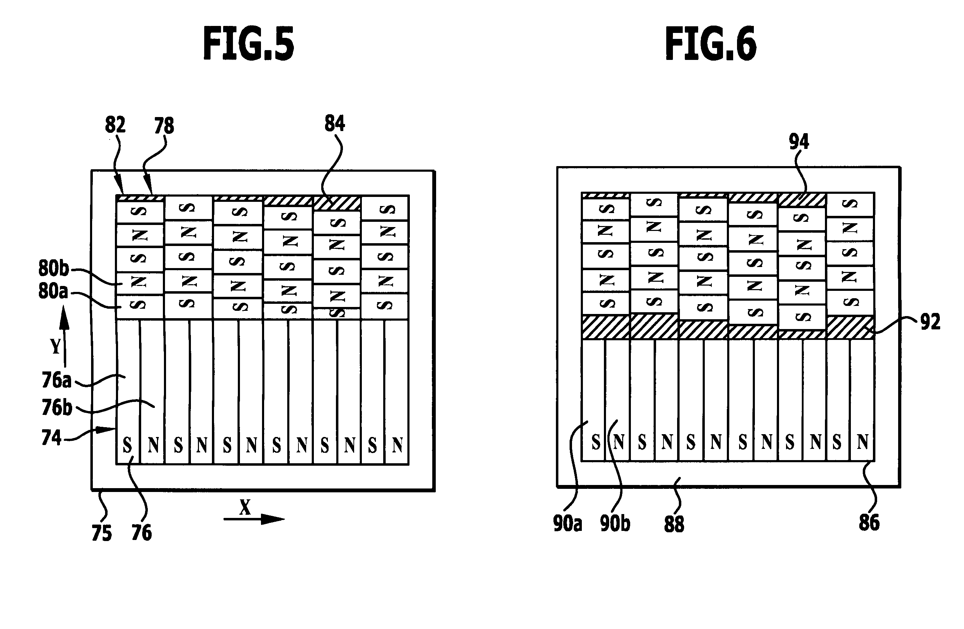

Bei einem vierten Ausführungsbeispiel eines erfindungsgemäßen Positions-/ Wegmesssystems 10 (Figur 5) ist ein Maßkörper 75 mit einem Inkrementalpositionsbestimmungsbereich 74 vorgesehen, welcher Polfelder 76 aufweist, die mit alternierender Polung in der ersten Richtung x angeordnet sind. Es ist ein Streifen 78 gebildet, welcher Polfelder 76a und 76b umfasst, die in der ersten Richtung x ohne Abstand nebeneinander liegen und entgegengesetzte Polung aufweisen.

Der Streifen 78 umfasst ferner Polfelder 80a, 80b usw., welche in der zweiten Richtung y auf die Polfelder 76a, 76b folgen und dabei einen Absolutpositionsbestimmungsbereich 82 bilden.

Eine Breite eines Polfelds 80a, 80b usw. in der ersten Richtung y entspricht dabei insbesondere der Summenbreite von Polfeldern 76a, 76b in den Streifen 78.

Die Polfelder 80a, 80b folgen in der zweiten Richtung y in alternierender Polung aufeinander.

Die Anordnung der Polfelder 80a, 80b kann dabei zwischen unterschiedlichen Streifen 78 variieren, um entsprechend die magnetische Kodierung für den Absolutpositionsbestimmungsbereich 82 zu bilden.

Bei dem Ausführungsbeispiel gemäß Figur 5 weisen alle Polfelder 76a, 76b der Streifen 78 in der zweiten Richtung y die gleiche Länge auf. Eine Länge eines ersten Polfelds 80a, welches direkt die Polfelder 76a, 76b berührt, kann insbesondere in diskreten Stufen für unterschiedliche Streifen 78 variieren; die Länge ist dabei auf die zweite Richtung y bezogen. Die Positionsvariation (Lagenvariation) in der zweiten Richtung y erfolgt dabei stufenweise.

Je nach Länge des entsprechenden Polfelds 80a in der zweiten Richtung y liegt am Rand ein nicht-magnetisierter Bereich 84. Die Länge eines solchen nicht-magnetisierten Bereichs 84 in der zweiten Richtung y hängt von der Länge des ersten Polfelds 80a ab. Die Länge des ersten Polfelds 80a und die Länge des nicht-magnetisierten Bereichs 84 pro Streifen ergeben in der Summe die Länge des nächstliegenden Polfelds 80b in der zweiten Richtung y.

Bei einem fünften Ausführungsbeispiel, welches in Figur 6 schematisch gezeigt ist, ist ein Maßkörper 86 vorgesehen, welcher Streifen 88 aufweist. Ein Streifen 88 umfasst direkt in der ersten Richtung x nebeneinander liegende Polfelder 90a, 90b mit entgegengesetzter Polung. An diese Polfelder 90a, 90b schließt sich in der zweiten Richtung y ein nicht-magnetischer Bereich 92 an. Auf diesen nicht-magnetischen Bereich folgen Polfelder 94 eines Absolutpositionsbestimmungsbereichs, wobei diese eine gleiche Länge in der zweiten Richtung y aufweisen können. An die Polfelder 94 kann sich in der zweiten Richtung y ein weiterer nicht-magnetischer Bereich anschließen.

Die Position (Lage) des nicht-magnetischen Bereichs 92, welcher auf die Polfelder 90a, 90b in der zweiten Richtung y folgt, kann bei unterschiedlichen Streifen 88 insbesondere in diskreten Stufen variieren. Dadurch ist die magnetische Kodierung in der zweiten Richtung y erreicht.

Die entsprechenden Polfelder 80a, 80b usw. bzw. 94 können beispielsweise dadurch hergestellt werden, dass zunächst der Maßkörper mit den Polfeldern 76a, 76b bzw. 90a, 90b magnetisiert wird und dann in einem weiteren Prozessschritt eine zweite Teilung (jetzt in der zweiten Richtung y) aufgebracht wird.

Bei dem vierten Ausführungsbeispiel und dem fünften Ausführungsbeispiel gemäß den Figuren 5 und 6 weisen die Polfelder 76a, 76b bzw. 90a, 90b des jeweiligen Inkrementalpositionsbestimmungsbereichs die gleiche Länge in der zweiten Richtung y auf. (Die Polfelder 80a, 80b können dabei eine andere (wie beispielsweise eine kleinere) Länge in der zweiten Richtung y aufweisen als die Polfelder 76a, 76b.)

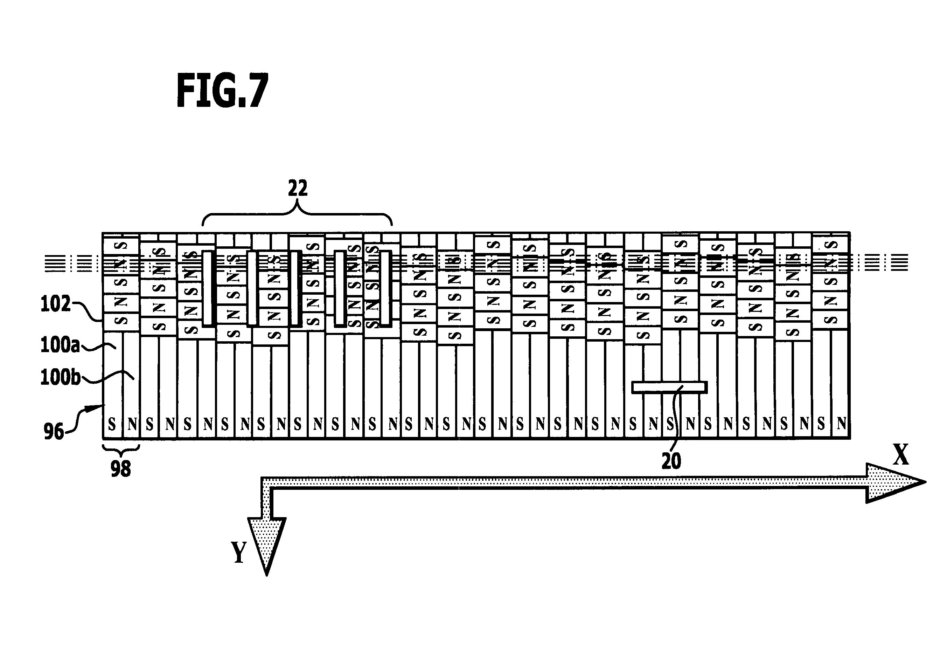

Bei einem sechsten Ausführungsbeispiel, welches in Figur 7 schematisch gezeigt ist, ist ein Maßkörper 96 vorgesehen, welcher in der ersten Richtung x nebeneinander angeordnete Streifen 98 aufweist, wobei ein Streifen 98 jeweils direkt benachbarte Polfelder 100a, 100b eines Inkrementalpositionsbestimmungsbereichs aufweist. Diese Polfelder 100a, 100b weisen für unterschiedliche Streifen 98 in der zweiten Richtung y unterschiedliche Positionen auf, d. h. die Positionen variieren. Dadurch ist die magnetische Kodierung in der zweiten Richtung y gebildet.

An die Polfelder 100a, 100b schließen sich in der zweiten Richtung y Polfelder 102 mit in der zweiten Richtung alternierender Polung an. Diese Polfelder 102 bilden einen Absolutpositionsbestimmungsbereich. Die Polfelder 102 können dabei die gleiche Länge in der zweiten Richtung y aufweisen.

Bedingt durch die unterschiedliche Länge der Polfelder 100a, 100b in der zweiten Richtung y ist ein Streifen 98 gegebenenfalls durch einen Bereich der Polfelder 100a, 100b an einem Außenrand abgeschlossen.

Bei der Herstellung werden die Polfelder 100a, 100b über die gesamte Ausdehnung des Streifens 98 in der zweiten Richtung y hergestellt. In einem weiteren Prozessschritt werden die Polfelder 102 aufgebracht.

Mittels der unterschiedlichen Position der Polfelder 100a, 100b in der zweiten Richtung y und damit der unterschiedlichen Höhenversatzanordnung (in der zweiten Richtung y) der Polfelder 102 wird die magnetische Kodierung in der zweiten Richtung y erreicht.

Bei dem in Figur 7 gezeigten Ausführungsbeispiel ist eine erste Sensoreinrichtung 20 vorgesehen und eine zweite Sensoreinrichtung 22, welche eine Mehrzahl von m Sensoren aufweist, welche wiederum in der ersten Richtung x beabstandet sind.

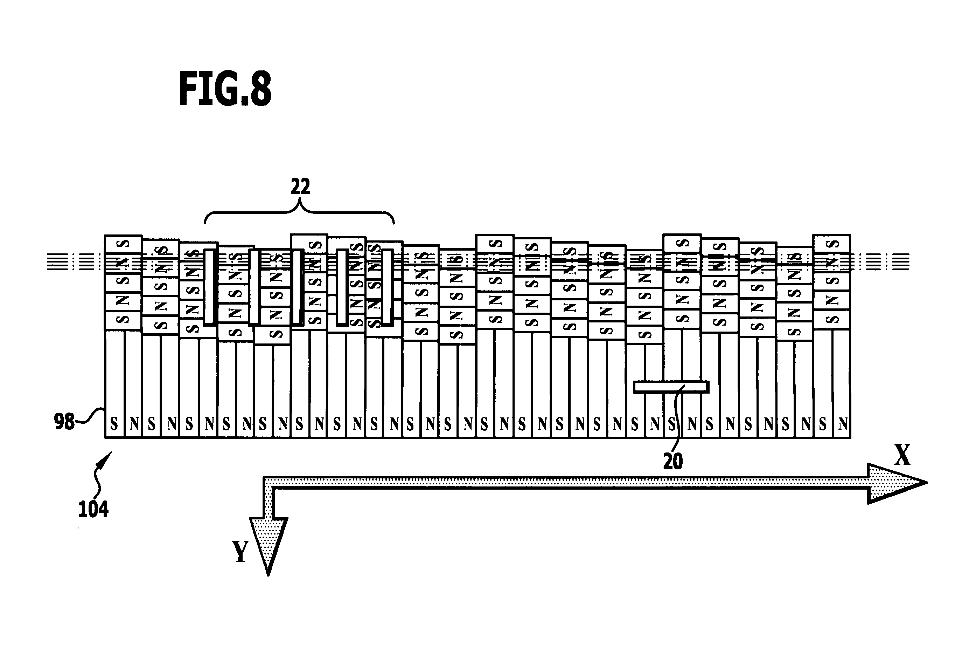

Bei einem siebten Ausführungsbeispiel, welches in Figur 8 gezeigt ist, ist ein Maßkörper 104 vorgesehen, welcher grundsätzlich gleich ausgebildet ist wie der Maßkörper 96 gemäß Figur 7, wobei der Unterschied darin liegt, dass die jeweiligen Streifen 98 an einem Außenrand nicht durch eine Fortsetzung der Polfelder 100a, 100b abgeschlossen sind, sondern dass ein entsprechendes Ende eines jeweiligen Streifens 98 in der zweiten Richtung y durch ein letztes Polfeld 102 gebildet ist.

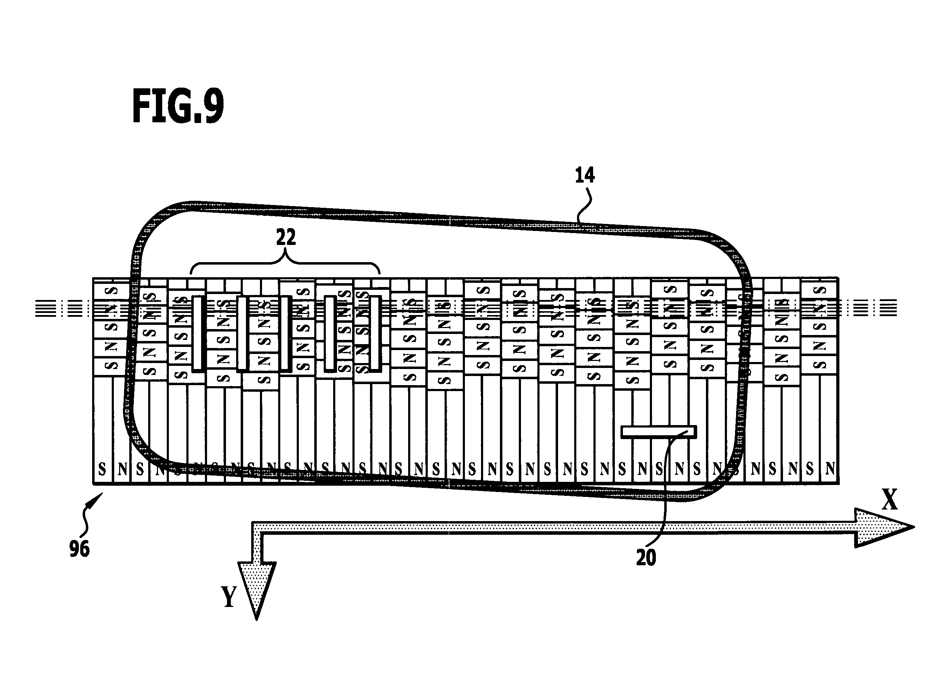

In Figur 9 ist ein achtes Ausführungsbeispiel gezeigt, welches dem sechsten Ausführungsbeispiel entspricht.

Beispielsweise ist eine Polbreite in der ersten Richtung von 1 mm vorgesehen. Es lässt sich dabei ein orthogonaler Versatz von je 200 µm in der zweiten Richtung y erreichen. Diese Quantisierungsstufe lässt sich mit der Sensoreinrichtung 22 erfassen. In der Messrichtung x beträgt die Auflösung mit dem entsprechenden Sensorkopf 1 µm. Ein Faktor 200 bildet die Reserve für Positionstoleranzen beim Aufmagnetisieren in der zweiten Richtung y und für einen Linearitätsfehler der zweiten Sensoreinrichtung 22.

Über einen Maßkörper 75 mit der Polfelderverteilung gemäß Figur 5 bzw. einen Maßkörper 86 bzw. einen Maßkörper 96 bzw. einen Maßkörper 104 lässt sich auch ein seitlicher Versatz des Sensorkopfs 14 erfassen. Dies ist in Figur 9 schematisch angedeutet. Aus den Sensorsignalen der orthogonalen Sensoren der Sensoreinrichtung 22 kann die Auswerteeinrichtung 36 erkennen, ob der Sensorkopf 14 versetzt bezüglich des entsprechenden Maßkörpers, beispielsweise des Maßkörpers 96, positioniert ist. Trotzdem lässt sich über den Positionsunterschied ermittelt aus den einzelnen Sensorsignalen die absolute Position bestimmen.

Es ist auch erfassbar, ob eine Verdrehung, wie in Figur 9 angedeutet um eine Achse in der dritten Richtung z vorliegt.

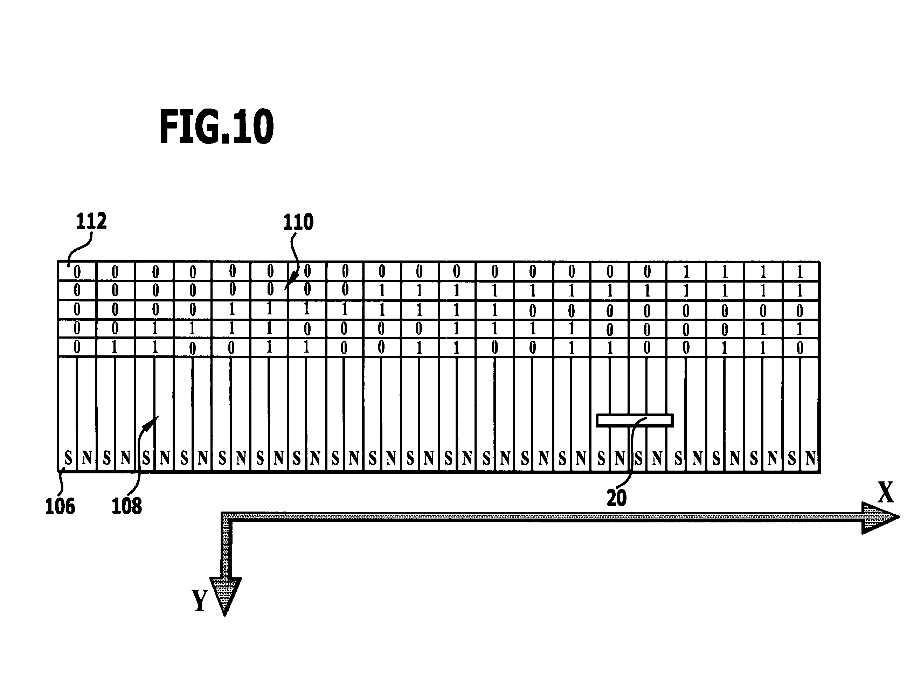

Bei einem neunten Ausführungsbeispiel, welches in Figur 10 schematisch gezeigt ist, ist ein Maßkörper 106 vorgesehen, an welchem der Inkrementalpositionsbestimmungsbereich 108 über entsprechende in der ersten Richtung x alternierend aufeinanderfolgende Polfelder gebildet ist. Ein Absolutpositionsbestimmungsbereich 110 ist über Polfelder 112 gebildet, welche in der zweiten Richtung y neben dem Inkrementalpositionsbestimmungsbereich 108 liegen. Den Polfeldern 112 ist, je nach dem ob sie vom Typ Nordpol oder Südpol sind, ein Digit 0 oder 1 zugeordnet. Es sind dadurch Streifen gebildet, welche im Absolutpositionsbestimmungsbereich 110 in der zweiten Richtung y eine bestimmte Abfolge von Digits aufweisen. Diese Digits stellen die magnetische Kodierung dar, welche die Absolutposition bestimmt.

Beispielsweise sind die Digits entsprechend einem Gray-Code kodiert.

Über eine entsprechende zweite Sensoreinrichtung (in Figur 10 nicht gezeigt) lässt sich im Absolutpositionsbestimmungsbereich 110 an einem jeweiligen Streifen der digitale Code auslesen und damit auch die Absolutposition bestimmen.

Bei der erfindungsgemäßen Lösung ist zusätzlich zu einer magnetischen Kodierung in der ersten Richtung x in einer dazu quer liegenden zweiten Richtung y eine weitere magnetische Kodierung vorgesehen. Diese weitere magnetische Kodierung mit einer Variation längs der ersten Richtung x bildet einen Absolutpositionsbestimmungsbereich und insbesondere eine Absolutspur. Über eine entsprechend ausgebildete zweite Sensoreinrichtung 22, welche eine Magnetfeldauflösung in der zweiten Richtung y hat, lässt sich die Absolutposition bestimmen mit einer Auflösung, die durch eine Breite von entsprechenden Polfeldern im Absolutpositionsbestimmungsbereich vorgegeben ist. Durch eine entsprechende Messung mit Interpolation über eine erste Sensoreinrichtung 20 an dem Inkrementalpositionsbestimmungsbereich lässt sich die Auflösung verbessern. Die inkrementale, genaue Messung wird wenig durch den Absolutpositionsbestimmungsbereich und die absolute Messung beeinflusst. Die Genauigkeit der inkrementalen Messung bleibt auch für das absolute Gesamtsystem erhalten. Damit lässt sich die Position bzw. der Weg des Sensorkopfs 14 in der ersten Richtung x absolut mit hoher Auflösung ermitteln.

Bei den obigen Ausführungsbeispielen wurde die Kodierung als magnetische Kodierung beschrieben. Auch andere Kodierungsarten wie beispielsweise eine kapazitive Kodierung, induktive Kodierung oder optische Kodierung sind möglich. Grundsätzlich ist es auch möglich, solche unterschiedliche Kodierungsarten an einem Maßkörper vorzusehen.

## Patentansprüche

1. Positions-/Wegmesssystem, umfassend einen Sensorkopf (14) und einen kodierten Maßkörper (12; 42; 60; 75; 86; 96; 106), wobei der Maßkörper (12; 42; 60; 75; 86; 96; 106) sich in einer ersten Richtung (x) und in einer quer zur ersten Richtung (x) liegenden zweiten Richtung (y) erstreckt, einen Absolutpositionsbestimmungsbereich (16) aufweist und einen Inkrementalpositionsbestimmungsbereich (18) mit einer Kodierung in der ersten Richtung (x) aufweist, und wobei der Absolutpositionsbestimmungsbereich (16) eine Kodierung in der zweiten Richtung (y) aufweist, der Sensorkopf (14) eine erste Sensoreinrichtung (20) mit einer Sensorauflösung parallel zur ersten Richtung (x) aufweist, welche dem Inkrementalpositionsbestimmungsbereich (18) zugeordnet ist, und eine zweite Sensoreinrichtung (22) mit einer Sensorauflösung in einer zweiten Richtung (y) aufweist, welche dem Absolutpositionsbestimmungsbereich (16) zugeordnet ist, **dadurch gekennzeichnet, dass** der Maßkörper magnetisch kodiert ist, dass der Absolutpositionsbestimmungsbereich (16) und der Inkrementalpositionsbestimmungsbereich (18) in der zweiten Richtung (y) nebeneinander angeordnet sind oder miteinander kombiniert sind, wobei Polfelder (46a, 46b) des Inkrementalpositionsbestimmungsbereichs (18) und Polfelder (54) des Absolutpositionsbestimmungsbereichs (16) in der zweiten Richtung (y) ohne Abstand dazwischen nebeneinander angeordnet sind, dass ein oder mehrere Polfelder (46a; 76a, 76b) des Inkrementalpositionsbestimmungsbereichs (18) und ein oder mehrere Polfelder (54; 80a, 80b) des Absolutpositionsbestimmungsbereichs (16) in einem Streifen (48; 78) angeordnet sind und der Maßkörper (12; 42; 60; 75; 86; 96; 106) eine Mehrzahl von in der ersten Richtung (x) nebeneinander angeordneten Streifen (48; 78) umfasst, und dass ein Streifen (48) ein erstes Polfeld (52) und ein zweites Polfeld (56) umfasst, wobei das Verhältnis der Länge (L₂) des zweiten Polfelds (56) zur Länge (L₁) des ersten Polfelds (52) in der zweiten Richtung (y) für unterschiedliche Streifen (78) variiert.

2. Positions-/Wegmesssystem nach Anspruch 1, **dadurch gekennzeichnet, dass** der Maßkörper (12; 42; 60; 75; 86; 96; 106) zur Kodierung Polfelder (46a, 46b; 54) eines ersten Typs und eines zweiten Typs aufweist.

3. Positions-/Wegmesssystem nach einem der vorangehenden Ansprüche, **dadurch gekennzeichnet, dass** in dem Inkrementalpositionsbestimmungsbereich (18) Polfelder (46a, 46b) unterschiedlichen Typs alternierend angeordnet sind.

4. Positions-/Wegmesssystem nach einem der vorangehenden Ansprüche, **dadurch gekennzeichnet, dass** ein oder mehrere Polfelder (46a; 76a, 76b) des Inkrementalpositionsbestimmungsbereichs (18) und ein oder mehrere Polfelder (54; 80a, 80b) des Absolutpositionsbestimmungsbereichs (16) in einem Streifen (48; 78) angeordnet sind und der Maßkörper (12; 42; 60; 75; 86; 96; 106) eine Mehrzahl von in der ersten Richtung (x) nebeneinander angeordneten Streifen (48; 78) umfasst, und insbesondere, dass in der ersten Richtung (x) gegenüberliegende Streifenbegrenzungslinien (50a, 50b) parallel zueinander sind, und insbesondere, dass das erste Polfeld (52) und das zweite Polfeld (54) von unterschiedlichem Typ oder nicht kodiert sind, und insbesondere, dass die unterschiedlichen Längen (L₁, L₂) in diskreten Stufen gebildet sind.

5. Positions-/Wegmesssystem nach Anspruch 4, **dadurch gekennzeichnet, dass** das erste Polfeld (52), welches mindestens teilweise den Inkrementalpositionsbestimmungsbereich (18) bildet, für unterschiedliche Streifen (48) unterschiedliche Längen (L₁) aufweist.

6. Positions-/Wegmesssystem nach Anspruch 4 oder 5, **dadurch gekennzeichnet, dass** das erste Polfeld (52), welches den Inkrementalpositionsbestimmungsbereich (18) bildet, für alle Streifen (70) die gleiche Länge aufweist.

7. Positions-/Wegmesssystem nach einem der Ansprüche 4 bis 6, **dadurch gekennzeichnet, dass** ein Streifen (70) nicht-kodierte Bereiche (68) aufweist, und insbesondere, dass die Anordnung der nicht-kodierten Bereiche (68) und/oder die Länge (L₂) nicht-kodierter Bereiche (68) in der zweiten Richtung (y) für unterschiedliche Streifen (70) variiert.

8. Positions-/Wegmesssystem nach einem der Ansprüche 4 bis 7, **dadurch gekennzeichnet, dass** ein Streifen (78) eine Mehrzahl von Polfeldern (80a, 80b) unterschiedlichen Typs aufweist, wobei bei unterschiedlichen Streifen (78) diese Polfelder (80a, 80b) in unterschiedlichen Positionen in der zweiten Richtung (y) angeordnet sind und diese Polfelder (80a, 80b) den Absolutpositionsbestimmungsbereich (82) mindestens teilweise bilden, und insbesondere, dass ein Streifen (78) Polfelder (76a, 76b) unterschiedlichen Typs aufweist, welche in der ersten Richtung (x) aufeinanderfolgend angeordnet sind.

9. Positions-/Wegmesssystem nach einem der vorangehenden Ansprüche, **dadurch gekennzeichnet, dass** durch die Polfelder (112) des Absolutpositionsbestimmungsbereichs (110) über Verteilung von Polfeldern (112) des ersten Typs zum zweiten Typ und nicht-kodierter Felder eine digitale Kodierung gebildet ist.

10. Positions-/Wegmesssystem nach einem der vorangehenden Ansprüche, **dadurch gekennzeichnet, dass** die zweite Sensoreinrichtung (22) so ausgebildet ist, dass in der zweiten Richtung n unterschiedliche Stufen entsprechend einer Anordnung und/oder Verteilung von Polfeldern erkennbar sind.

11. Positions-/Wegmesssystem nach einem der vorangehenden Ansprüche, **dadurch gekennzeichnet, dass** die zweite Sensoreinrichtung (22) eine Mehrzahl von Sensoren aufweist, und insbesondere, dass bei der Mehrzahl von Sensoren Sensoren in der ersten Richtung (x) beabstandet angeordnet sind, und insbesondere, dass der Abstand benachbarter Sensoren in der ersten Richtung (x) größer oder kleiner ist als eine Polfeldbreite (B) von Polfeldern in der ersten Richtung (x).

12. Positions-/Wegmesssystem nach Anspruch 10 oder 11, **dadurch gekennzeichnet, dass** zur Messauflösung in der zweiten Richtung (y) die zweite Sensoreinrichtung (22) mindestens eine Reihe von Sensoren umfasst, welche in der zweiten Richtung (y) nebeneinander angeordnet sind, und/oder mindestens einen Sensor umfasst, welcher Magnetfeldwinkel ermittelt, und/oder mindestens einen analogen Weg-/Positionssensor umfasst, welcher einen Weg oder eine Position in der zweiten Richtung ermittelt.

13. Positions-/Wegmesssystem nach einem der vorangehenden Ansprüche, **dadurch gekennzeichnet, dass** die erste Sensoreinrichtung (20) mindestens einen analogen Weg-/Positionssensor umfasst, durch welchen ein Weg oder eine Position in der ersten Richtung (x) ermittelbar ist.

14. Positions-/Wegmesssystem nach einem der vorangehenden Ansprüche, **gekennzeichnet durch** eine dritte Sensoreinrichtung (24), welche eine Sensorauflösung in einer dritten Richtung (z) quer zur ersten Richtung (x) und quer zur zweiten Richtung (y) aufweist.

## Claims

1. Position/displacement measuring system, comprising a sensor head (14) and an encoded scale body (12; 42; 60; 75; 86; 96; 106), the scale body (12; 42; 60; 75; 86; 96; 106) extending in a first direction (x) and in a second direction (y) lying transversely to the first direction (x), and having a region for absolute position determination (16) and a region for incremental position determination (18) with an encoding in the first direction (x), and the region for absolute position determination (16) having an encoding in the second direction (y), the sensor head (14) having a first sensor device (20) with a sensor resolution parallel to the first direction (x), which is associated with the region for incremental position determination (18), and a second sensor device (22) with a sensor resolution in a second direction (y), which is associated with the region for absolute position determination (16), **characterized in that** the scale body is magnetically encoded, **in that** the region for absolute position determination (16) and the region for incremental position determination (18) are arranged next to each other or are combined with each other in the second direction (y), pole fields (46a, 46b) of the region for incremental position determination (18) and pole fields (54) of the region for absolute position determination (16) being arranged next to one another in the second direction (y) without any spacing between them, **in that** one or more pole fields (46a; 76a, 76b) of the region for incremental position determination (18) and one or more pole fields (54; 80a, 80b) of the region for absolute position determination (16) are arranged in a strip (48; 78), and the scale body (12; 42; 60; 75; 86; 96; 106) comprises a plurality of strips (48; 78) arranged next to one another in the first direction (x), and **in that** a strip (48) comprises a first pole field (52) and a second pole field (56), with the ratio of the length (L₂) of the second pole field (56) to the length (L₁) of the first pole field (52) in the second direction (y) varying for different strips (78).

2. Position/displacement measuring system in accordance with claim 1, **characterized in that** the scale body (12; 42; 60; 75; 86; 96; 106) has pole fields (46a, 46b; 54) of a first type and a second type for the encoding.

3. Position/displacement measuring system in accordance with any one of the preceding claims, **characterized in that** pole fields (46a, 46b) of a different type are arranged alternately in the region for incremental position determination (18).

4. Position/displacement measuring system in accordance with any one of the preceding claims, **characterized in that** one or more pole fields (46a; 76a, 76b) of the region for incremental position determination (18) and one or more pole fields (54; 80a, 80b) of the region for absolute position determination (16) are arranged in a strip (48; 78), and the scale body (12; 42; 60; 75; 86; 96; 106) comprises a plurality of strips (48; 78) arranged next to one another in the first direction (x), and, in particular, **in that** strip delimiting lines (50a, 50b) lying opposite one another in the first direction (x) extend parallel to one another, and, in particular, **in that** the first pole field (52) and the second pole field (54) are of a different type or are not encoded, and, in particular, **in that** the different lengths (L₁, L₂) are formed in discrete steps.

5. Position/displacement measuring system in accordance with claim 4, **characterized in that** the first pole field (52), which forms at least partially the region for incremental position determination (18), has different lengths (L₁) for different strips (48).

6. Position/displacement measuring system in accordance with claim 4 or 5, **characterized in that** the first pole field (52), which forms the region for incremental position determination (18), has the same length for all strips (70).

7. Position/displacement measuring system in accordance with any one of claims 4 to 6, **characterized in that** a strip (70) has non-encoded regions (68), and, in particular, **in that** the arrangement of the non-encoded regions (68) and/or the length (L₂) of the non-encoded regions (68) in the second direction (y) varies for different strips (70).

8. Position/displacement measuring system in accordance with any one of claims 4 to 7, **characterized in that** a strip (78) comprises a plurality of pole fields (80a, 80b) of a different type, and in different strips (78) these pole fields (80a, 80b) are arranged in different positions in the second direction (y) and these pole fields (80a, 80b) form at least partially the region for absolute position determination (82), and, in particular, **in that** a strip (78) comprises pole fields (76a, 76b) of a different type, which are arranged one after another in the first direction (x).

9. Position/displacement measuring system in accordance with any one of the preceding claims, **characterized in that** a digital encoding is formed by the pole fields (112) of the region for absolute position determination (110) by means of distribution of pole fields (112) of the first type and the second type and non-encoded fields.

10. Position/displacement measuring system in accordance with any one of the preceding claims, **characterized in that** the second sensor device (22) is configured such that in the second direction n different steps corresponding to an arrangement and/or a distribution of pole fields are recognizable.

11. Position/displacement measuring system in accordance with any one of the preceding claims, **characterized in that** the second sensor device (22) comprises a plurality of sensors, and, in particular, **in that** in the plurality of sensors, sensors are spaced from one another in the first direction (x), and, in particular, **in that** the spacing between adjacent sensors in the first direction (x) is greater or smaller than a pole field width (B) of pole fields in the first direction (x).

12. Position/displacement measuring system in accordance with claim 10 or 11, **characterized in that** for the measuring resolution in the second direction (y), the second sensor device (22) comprises at least one row of sensors arranged adjacent to one another in the second direction (y), and/or at least one sensor which determines magnetic field angles, and/or at least one analog displacement/position sensor which determines a displacement or a position in the second direction.

13. Position/displacement measuring system in accordance with any one of the preceding claims, **characterized in that** the first sensor device (20) comprises at least one analog displacement/position sensor for determining a displacement or a position in the first direction (x).

14. Position/displacement measuring system in accordance with any one of the preceding claims, **characterized by** a third sensor device (24), which has a sensor resolution in a third direction (z) transverse to the first direction (x) and transverse to the second direction (y).

## Revendications

1. Système de mesure de position/déplacement doté d'une tête de capteur (14) et d'un corps de mesure codé (12 ; 42 ; 60 ; 75 ; 86 ; 96 ; 106), le corps de mesure (12 ; 42 ; 60 ; 75 ; 86 ; 96 ; 106) s'étendant dans un premier sens (x) et dans un deuxième sens (y) transversal au premier sens (x), présentant une zone de détermination de la position absolue (16) et une zone de détermination de la position incrémentielle (18) avec un codage dans le premier sens (x), la zone de détermination de la position absolue (16) présentant un codage dans le deuxième sens (y), la tête de capteur (14) présentant un premier dispositif de détection (20) avec une résolution de détection parallèle au premier sens (x) affecté à la zone de détermination de la position incrémentielle (18), et un deuxième dispositif de détection (22) avec une résolution de détection dans un deuxième sens (y) affecté à la zone de détermination de la position absolue (16), **caractérisé en ce que** le corps de mesure est codé magnétiquement, **en ce que** la zone de détermination de la position absolue (16) et la zone de détermination de la position incrémentielle (18) sont disposées côte à côte dans le deuxième sens (y) ou sont combinées ensemble, des champs polaires (46a, 46b) de la zone de détermination de la position incrémentielle (18) et des champs polaires (54) de la zone de détermination de la position absolue (16) dans le deuxième sens (y) étant disposés directement côte à côte, **en ce qu'**un ou plusieurs champs polaires (46a ; 76a, 76b) de la zone de détermination de la position incrémentielle (18) et un ou plusieurs champs polaires (54 ; 80a, 80b) de la zone de détermination de la position absolue (16) sont disposés dans une bande (48 ; 78) et le corps de mesure (12 ; 42 ; 60 ; 75 ; 86 ; 96 ; 106) comporte une pluralité de bandes (48 ; 78) disposées côté à côte dans le premier sens (x) et **en ce qu'**une bande (48) comprend un premier champ polaire (52) et un deuxième champ polaire (56), le rapport entre la longueur (L₂) du deuxième champ polaire (56) et la longueur (L₁) du premier champ polaire (52) dans le deuxième sens (y) variant pour différentes bandes (78).

2. Système de mesure de position/déplacement selon la revendication 1, **caractérisé en ce que** le corps de mesure (12 ; 42; 60 ; 75 ; 86 ; 96 ; 106) présente des champs polaires (46a, 46b ; 54) d'un premier type et d'un deuxième type pour le codage.

3. Système de mesure de position/déplacement selon l'une quelconque des revendications précédentes, **caractérisé en ce que** des champs polaires (46a, 46b) de différents types sont disposés en alternance dans la zone de détermination de la position incrémentielle (18).

4. Système de mesure de position/déplacement selon l'une quelconque des revendications précédentes, **caractérisé en ce qu'**un ou plusieurs champs polaires (46a ; 76a, 76b) de la zone de détermination de la position incrémentielle (18) et un ou plusieurs champs polaires (54 ; 80a, 80b) de la zone de détermination de la position absolue (16) sont disposés dans une bande (48 ; 78) et le corps de mesure (12 ; 42 ; 60 ; 75 ; 86 ; 96 ; 106) comprend une pluralité de bandes (48 ; 78) disposées côte à côte dans le premier sens (x) et, en particulier, **en ce que** des lignes de délimitation des bandes (50a, 50b) se faisant face dans le premier sens (x) sont parallèles entre elles et, en particulier, **en ce que** le premier champ polaire (52) et le deuxième champ polaire (54) sont de différents types ou ne sont pas codés et, en particulier, **en ce que** les différentes longueurs (L₁, L₂) sont formées en niveaux discrets.

5. Système de mesure de position/déplacement selon la revendication 4, **caractérisé en ce que** le premier champ polaire (52), lequel forme, du moins en partie, la zone de détermination de la position incrémentielle (18), présente différentes longueurs (L₁) pour différentes bandes (48).

6. Système de mesure de position/déplacement selon la revendication 4 ou la revendication 5, **caractérisé en ce que** le premier champ polaire (52), lequel forme la zone de détermination de la position incrémentielle (18), présente la même longueur pour toutes les bandes (70).

7. Système de mesure de position/déplacement selon l'une quelconque des revendications 4 à 6, **caractérisé en ce qu'**une bande (70) présente des zones non codées (68) et, en particulier, **en ce que** la disposition des zones non codées (68) et/ou la longueur (L₂) de zones non codées (68) dans le deuxième sens (y) varie pour différentes bandes (70).

8. Système de mesure de position/déplacement selon l'une quelconque des revendications 4 à 7, **caractérisé en ce qu'**une bande (78) présente une pluralité de champs polaires (80a, 80b) de différents types, ces champs polaires (80a, 80b) étant disposés dans différentes positions dans le deuxième sens (y) lorsque les bandes (78) sont différentes, et ces champs polaires (80a, 80b) formant, du moins en partie, la zone de détermination de la position absolue (82) et, en particulier, **en ce qu'**une bande (78) présente des champs polaires (76a, 76b) de différents types lesquels sont disposés l'un sur l'autre dans le premier sens (x).

9. Système de mesure de position/déplacement selon l'une quelconque des revendications précédentes, **caractérisé en ce qu'**un codage numérique est formé par les champs polaires (112) de la zone de détermination de la position absolue (110) par répartition de champs polaires (112) de premier type vers le deuxième et de champs non codés.

10. Système de mesure de position/déplacement selon l'une quelconque des revendications précédentes, **caractérisé en ce que** le deuxième dispositif de détection (22) est conçu de manière à pouvoir reconnaître, dans le deuxième sens, n différents niveaux conformément à une disposition et/ou à une répartition de champs polaires.

11. Système de mesure de position/déplacement selon l'une quelconque des revendications précédentes, **caractérisé en ce que** le deuxième dispositif de détection (22) présente une pluralité de capteurs et, en particulier, **en ce que**, parmi cette pluralité de capteurs, des capteurs sont disposés à distance l'un de l'autre dans le premier sens (x) et, en particulier, **en ce que** la distance entre des capteurs voisins dans le premier sens (x) est plus grande ou plus petite qu'une largeur (B) de champs polaires dans le premier sens (x).

12. Système de mesure de position/déplacement selon la revendication 10 ou la revendication 11, **caractérisé en ce que** le deuxième dispositif de détection (22), comporte, en vue de la résolution de mesure dans le deuxième sens (y), au moins une série de capteurs disposés côte à côte dans le deuxième sens (y) et/ou au moins un capteur qui détermine l'angle du champ magnétique, et/ou au moins un capteur de déplacement/position analogique qui détermine un déplacement ou une position dans le deuxième sens.

13. Système de mesure de position/déplacement selon l'une quelconque des revendications précédentes, **caractérisé en ce que** le premier dispositif de détection (20) comprend au moins un capteur de déplacement/position analogique qui permet de déterminer un déplacement ou une position dans le premier sens (x).

14. Système de mesure de position/déplacement selon l'une quelconque des revendications précédentes, **caractérisé par** un troisième dispositif de détection (24), lequel présente une résolution de détection dans un troisième sens (z) transversalement au premier sens (x) et transversalement au deuxième sens (y).
